# EUROPEAN PATENT APPLICATION

(11) **EP 1 804 504 A2**
(43) Date of publication of application: **04.07.2007**
(21) Application number: 06026721.8
(22) Date of filing: 22.12.2006
(51) Int. Cl.: H04N 5/782

(54) **Recording media content on different devices**

(30) Priority: 30.12.2005 US 324058
(71) Applicant: GENERAL INSTRUMENT CORPORATION, Horsham, Pennsylvania 19044 (US)
(72) Inventor: Lillethun, David J., Evanston, Illinois 60202 (US); Almaula, Jay R., Bartlett, Illinois 60103 (US); Horozov, Tzvetan T., Hoffman Estates, Illinois 60195 (US); Sparrell, Carlton, Marblehead, Massachusetts 01945 (US); Vasudevan, Venugopal, Palatine, Illinois 60067 (US)
(74) Representative: Openshaw, Paul Malcolm

(57) **Abstract**

A system (100) for recording media content on different recording devices (112) includes a metadata insertion device (104) configured to annotate advertisement content with metadata, where the advertisement content references a media content, and where the metadata is configured to enable recording of the media content on the different recording devices (112). The system also includes a program finder server (118) configured to determine the next broadcast of the media content available to the different recording devices (112) and a recording server (116) configured to access information pertaining to the different recording devices and configured to schedule a recording of the media content on one or more of the recording devices (112) based upon data and protocols required by the one or more recording devices.

## Description

### BACKGROUND

Advertisements on the Internet, such as, through use of selectable links on web pages, have increased dramatically with the advancement of the Internet. In addition, the Internet has allowed users the ability to access a greater level of information through activation of the Internet advertisements, which, in many cases, provides users with greater decision-making capabilities with respect to the advertised products or services. In certain instances, the Internet advertisements are used to enable recording of media content referenced by the advertisements.

In these instances, the selectable advertisements are published by television service providers linked to specific digital video recorders (DVRs), such as, TiVo^{®} and ReplayTV^{®}. These providers often directly link the advertisements to their specific DVRs. As such, when the Internet advertisements are activated, the media content for a first type of DVR is recorded on that first type of DVR. In other words, selection of the same advertisement is incapable of causing the media content to be recorded on multiple types of DVRs. The advertisements are thus required to be tailored to the specific types of DVRs for them to properly cause the different types of DVRs to record the media content.

It would thus be beneficial to have a system that enables recording of the media content on different types of recording devices through activation of the same advertisements.

### SUMMARY

A system for recording media content on different recording devices is disclosed herein. The system includes a metadata insertion device configured to annotate advertisement content with metadata, where the advertisement content references a media content, and where the metadata is configured to enable recording of the media content on the different recording devices. The system also includes a program finder server configured to determine the next broadcast of the media content available to the different recording devices and a recording server configured to access information pertaining to the different recording devices and configured to schedule a recording of the media content on one or more of the recording devices based upon data and protocols required by the one or more recording devices.

### BRIEF DESCRIPTION OF THE DRAWINGS

Embodiments are illustrated by way of example and not limited in the following figure(s), in which like numerals indicate like elements, in which:
FIG. 1A illustrates a block diagram of a system for recording media content on different types of recording devices, according to a first embodiment of the invention;
FIGS. 1B-1D illustrate respective block diagrams, similar to FIG. 1 A, of systems for recording media content on different types of recording devices, according to three alternate embodiments of the invention;
FIG. 2 illustrates a more detailed block diagram of the recording server depicted in FIGS. 1A-1D, according to an embodiment of the invention;
FIGS. 3A and 3B illustrate respective block diagrams depicting alternate manners in which the annotation server may be implemented, according to two embodiments of the invention;
FIG. 4 illustrates a method for automatically scheduling a media content recording on at least one type of recording device, according to an embodiment of the invention; and
FIG. 5 illustrates a computer system, which may be employed to perform various functions described herein, according to an embodiment of the invention.

### DETAILED DESCRIPTION

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In other instances, well known methods and structures have not been described in detail so as not to unnecessarily obscure the embodiments.

Disclosed herein is a system and method for recording media content on different types of recording devices when a recording advertisement is activated. The recording advertisement may be published as a web URL by a content advertiser for a specific media content. In addition, a web page may automatically be annotated with a URL or metadata that activates the remote recording on the recording device.

In one regard, when the web URL is activated, the disclosed system may automatically schedule the recording of the media content on one or more different types of recording devices. As disclosed in greater detail herein below, the recording may be scheduled regardless of the electronic programming guide (EPG) channel lineup of different recording devices and the lack of a standard for EPG mapping across multiple service providers and carriers. As such, a relatively large number of users may be able to record the media content by using the same URL or metadata even though the users have different recording devices and while having access to different media broadcast services.

### System Overview

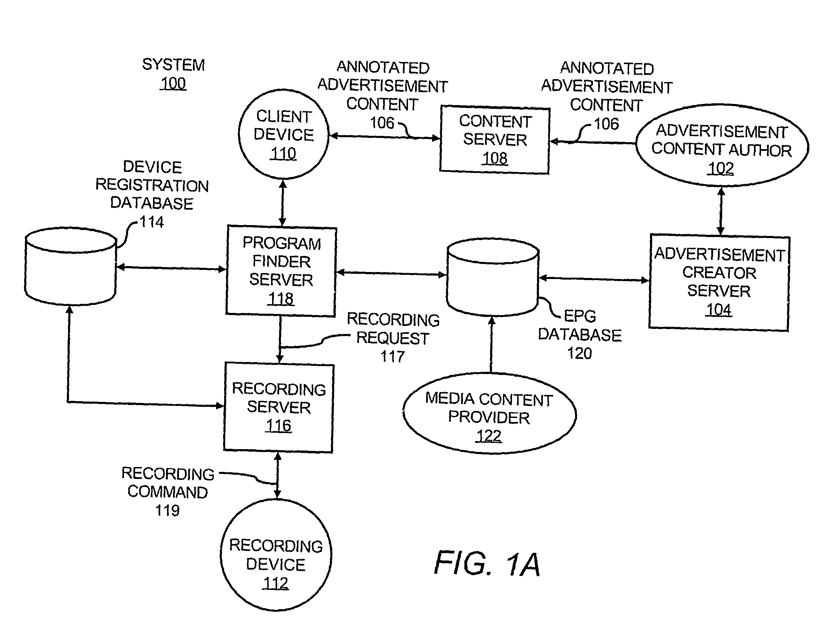

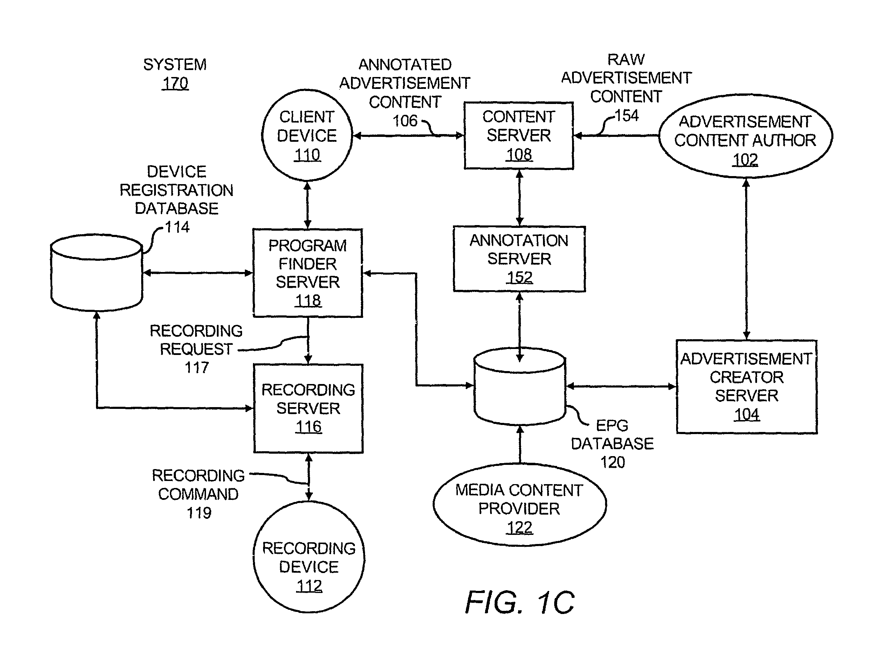

FIG. 1A illustrates a block diagram of a system 100 for recording media content on different types of recording devices, according to a first embodiment. It should be understood that the following description of the system 100 is but one manner of a variety of different manners in which such a system 100 may be configured and operated. In addition, it should be understood that the system 100 may include additional components and that some of the components described may be removed and/or modified without departing from a scope of the system 100.

Generally speaking, the system 100 provides users with the ability to automatically record media content on recording devices through activation of an annotated advertisement content that references the media content. The annotated advertisement content may be in the form of a web URL that may, for instance, be displayed to a user through a client device 110. In addition, or alternatively, the annotated advertisement content may be applied on mobile devices, such as, cellular telephones, PDAs, etc. via hyperlinks in WAP web pages, in SCREEN3^{™} pages, and the like. As a further example, the metadata may be embedded with DVB-H broadcasts that may allow a media content recording to be scheduled. Moreover, the metadata may also be embedded in any reasonably suitable content that is, or contains media or advertisements and is consumed on a user-controlled device.

In addition, the system 100 generally enables recording of the media content on different types of recording devices as well as through different service providers to thereby enable a relatively large number of users using different types of recording devices with the ability to record the media content through selection of the same annotated advertisement content. Moreover, the system 100 enables advertisement producers to generate, or have generated for them, advertisement content that provides users with the ability to automatically record the media content.

As used throughout the present disclosure, the terms "media content" may be defined as any content of a multimedia format that may be provided for user consumption. In this regard, media content may comprise, for instance, television broadcasts, radio broadcasts, webcasts, podcasts, etc. In addition, the terms "recording device" may be defined as any piece of equipment or software capable of recording "media content" of one or more media types that may schedule recording of future media content in advance and may remotely receive commands to schedule the recording. The terms "media type" may be defined as the delivery medium of particular media content, such as, a television, a radio, a computer, a portable digital assistant (PDA), etc.

The components of the system 100 may communicate with one another through one or more networks. The one or more networks may include one or more of private networks, public networks, such as the Internet, wireless networks, such as satellite and cellular networks, and local area wireless networks, such as WiFi or Bluetooth networks, wired networks, local area networks, wide area networks, and any other type of communication network.

### Advertisement Content Author and Advertisement Creator Server

With reference back to FIG. 1 A, the system 100 is depicted as including an advertisement content author 102. The "advertisement content" authored by the advertisement content author 102 may be defined as any content provided for user consumption that is capable of having recording advertisements embedded in or associated with the advertisement content. In addition, the terms "recording advertisements" may be defined as metadata that is embedded in or associated with annotated advertisement content, which allows the recording of a particular piece of media content, or the user interface display of such metadata. Moreover, the "annotated advertisement content" may be defined as any advertisement content that contains one or more recording advertisements.

The system 100 is also depicted as including an advertisement creator server 104. The advertisement content author 102 may implement the advertisement creator server 104 to obtain recording advertisements that the advertisement content author 102 may place in the advertisement content, to thereby create annotated advertisement content 106. In one example, the recording advertisements may comprise web URLs selectable by a user through use of a client device 110.

In addition, the advertisement creator server 104 may include at least one of an application program interface (API), a user interface (UI), and other type of interface that allows an advertisement content author 102 to browse and/or search for media content in, for instance, an electronic programming guide (EPG) 120, which is described in greater detail herein below. When the desired piece of media content is found, the advertisement content author 102 may indicate that media content to the advertisement creator server 104. The advertisement creator server 104 may provide the metadata corresponding to the indicated media content to the advertisement content author 102. In addition, the advertisement content author 102 may insert the metadata into the advertisement content to create the annotated advertisement content 106, which may be used to cause a recording of the media content to be scheduled when the metadata or recording advertisement is activated.

By way of example, an advertisement content author 102 may implement the advertisement creator server 104 to perform a search for the television program, "Program 1". The advertisement content author 102 may be presented with a list of episodes of the "Program 1" television program and the advertisement content author 102 may select one of the episodes. In this example, the advertisement creator server 104 may return the following metadata:

```
<title>Program 1 </title>
<episode_number>1</episode_number>.
```

This metadata may be inserted into or associated with the advertisement content by the advertisement creator server 104 or the advertisement content author 102 to form the annotated advertisement content. In addition, the advertisement content author 102 may publish the annotated advertisement content 106 on one or more content servers 108. Although a single content server 108 has been illustrated in FIG. 1A, the system 100 may include any reasonably suitable number of content servers 108 without departing from a scope of the system 100.

### Content Server

A content server 108 may be defined as a server configured to transmit advertisement content to one or more client devices 110, for instance, in either a push or a pull model. The content server 108 may comprise, for instance, a web server on the Internet or a server configured to broadcast data in other formats, such as, a SCREEN3^{™} server, developed by Motorola, Inc., headquartered in Schaumburg, Illinois, a Digital Video Broadcasting: Handheld (DVB-H) broadcasting station, and the like.

The content server 108 may store at least one of the annotated advertisement content 106 and raw advertisement content. The raw advertisement content may be defined as advertisement content that does not contain any recording advertisements. In situations where the content server 108 stores both the annotated advertisement content 106 and the raw advertisement content of the same media content, the content server 108 may transmit the annotated advertisement content 106 to the client device 110. For instance, the content server 108 may transmit the annotated advertisement content 108 to the client device 110 in situations where the user is identified as having a recording device 112 registered with the system 100, which is described in greater detail herein below. In situations where a recording device 112 of the user has not been registered with the system 100, the content server 108 may transmit the raw advertisement content to the client device 110.

As described in greater detail herein below, a user may select or otherwise activate the annotated advertisement content 106 transmitted to the client device 110. In addition, activation of the annotated advertisement content 106 may trigger transmission of the metadata contained in the annotated advertisement content 106, which may cause recording of the media content indicated in the metadata to be scheduled in one or more recording devices 112.

### Device Registration Database

A user may register one or more recording devices 112 with a device registration database 114 through a recording server 116, which is described in greater detail herein below. The one or more recording devices 112 may be configured to record the same or different types of media content with respect to each other. In addition, a user may register one or more client devices 110 to be associated with the one or more recording devices 112 in the device registration database 114.

The types of information stored in the device registration database 114 may include, for instance, identification of the recording device 112, the type(s) of media the recording device 112 is configured to record (for instance, television, radio, webcasts, podcasts, etc.), the service provider of the recording device 112 (for instance, TiVo^{®}, ReplayTV^{®}, MythTV^{®}, etc.), the lineup (that is, the broadcast stations the recording device 112 may record from, for instance, available television/radio channels, webcast streams, etc.), how much, if any, electronic programming guide (EPG) data is stored locally on the recording device 112, any information needed for authenticating to the recording device 112 that is not provided at the time an annotated advertisement content 106 is activated, other metadata, etc.

In any regard, the information stored in the device registration database 114 may be accessible to the recording server 116 and the program finder server 118. Prior to a more detailed description of the recording server 116 and the program finder server 118, however, a discussion of the EPG database 120 is provided.

### EPG Database

As shown in FIG. 1A, the electronic programming guide (EPG) database 120 receives information from a media content provider 122. The media content provider 122 may store information about media content, content sources (for instance, stations, channels, websites, etc.), showing schedules (such as, what content is on each station and the duration of the content), etc., in the EPG database 120. The EPG database 120 may differ from traditional EPG databases that contain television broadcast information in a number of ways.

### [!Invalid Character Setting]

Firstly, most EPG databases only contain a particular lineup of content that is relevant to a specific user or device, such as for TiVo^{®}, ReplayTV^{®}, MythTV^{®}, etc. The EPG database 120, however, contains substantially all of the possible media content in order to service a substantially large number of users who may be subject to a variety of differing lineups. In addition, the EPG database 120 may contain media content and schedule information for media content in addition to television lineups. Thus, for instance, the EPG database 120 may contain cataloged media content for virtually all of the different media content types that the system 100 may support. For example, the EPG database 120 may contain schedules for television, radio, webcasts, podcasts, etc. In addition, the EPG database 120 may contain information for non-schedule-based media content, such as "on demand" media content.

In any regard, the EPG database 120 may provide a list of program titles to use as linkable character strings. The EPG database 120 may also differ from conventional EPG databases in that the EPG database 120 may not contain a database of destination addresses for hyperlinks to the linkable character strings. Instead, in the EPG database 120, the destination addresses are dynamically assembled from metadata about the referenced content contained in the EPG database 120.

### Program Finder Server

Also shown in FIG. 1A is a program finder server 118 configured to receive an indication from a client device 110 that an annotated advertisement content 106 has been activated. In other words, the program finder server 118 is configured to receive the request to record the media content referenced in the annotated advertisement content 106 from a client device 110. In addition to receiving the request, the program finder server 118 may also receive identifying information for the client device 110 that transmitted the request.

In one example, all of the client devices 110 may transmit the same requests to the program finder server 118 for the same recording advertisement. In this example, the only difference between the requests may comprise the identities of the client devices 110 making the requests.

In any regard, the program finder server 118 may search for the identified client device 110 in the device registration database 114. In addition, the program finder server 118 may retrieve the lineup for the recording device 112 with which that client device 110 is registered. The program finder server 118 may then search the EPG database 120 for the earliest next showing of the media content referenced in the recording advertisement in the lineup or among "on demand" content available to the recording device 112.

If at least one next showing of the referenced media content is found in the EPG database 120 for the recording device 112, the program finder server 118 may retrieve the information from the EPG database 120 that is necessary to schedule a recording of the referenced media content on the recording device 112. The necessary information may include, for instance, the channel number, time, and duration of the media content. In addition, the program finder server 118 may transmit that information and the client device 110 identification in a recording request 117 to the recording server 116.

In situations where the recording device 112 contains local EPG data, but the selected showing of the referenced media content is farther in the future than what the local EPG data contains, the program finder server 118 may send an EPG "spot update" containing information regarding the referenced media content prior to sending the recording request 117.

According to another example, the program finder server 118 may support user groups. In this example, a user group may allow a recording request to be made on its behalf and the program finder server 118 may retrieve information concerning the recording devices 112 for all of the member users of the group and may schedule recordings on all of the recording devices 112 when the recording request is made.

In addition, user groups may be either "open" or "closed". An open user group may allow any member of the user group to place a recording request on the group's behalf and may thus trigger recordings for all of the members of the group. A closed user group may have a single member, or a limited number of members, acting as moderator(s) such that only they are allowed to place recording requests on the group's behalf. In addition, or alternatively, members of the user groups may receive notifications to enable them to opt in to record media content indicated by the group, rather than having the media content automatically recorded, or to enable the members to individually choose between automatic recordings or notifications.

### Recording Server

The recording server 116 is configured to access information pertaining to the recording devices 112 and is configured to issue a recording command 119 to one or more of the recording devices 112 based upon the accessed information pertaining to the recording devices 112. In one regard, the recording server 116 generally allows all of the users to activate the same recording advertisement for a piece of media content, regardless of the make, model, or service provider of the user's recording device 112. In addition, the recording server 116 may receive requests to record media content from the program finder server 118 in which the client device 110 identification information and the scheduling information may differ, because different recording devices 112 may have different lineups, but may comprise the same types of recording devices 112. For instance, the recording devices 112 may include the same make, model, service provider, etc.

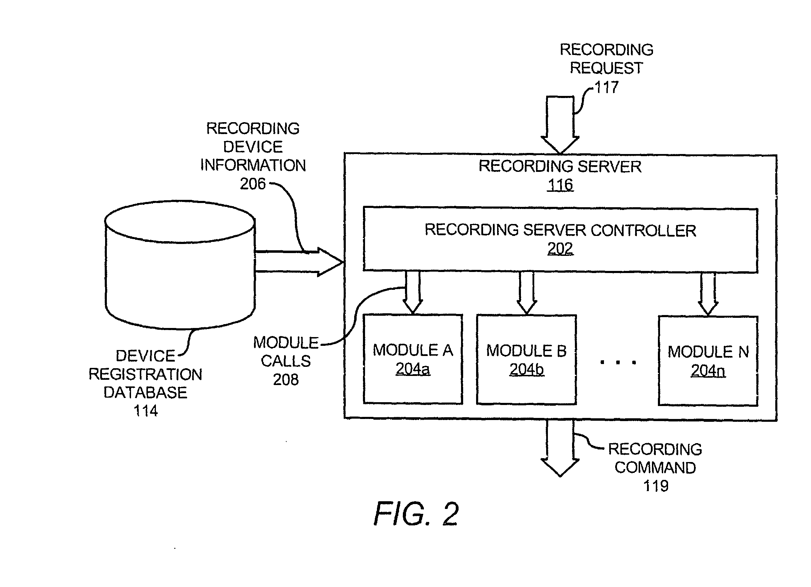

A more detailed description of the recording server 116 is provided with respect to FIG. 2, which shows a more detailed illustration of the recording server 116 and some of its interactions with other components in the system 100. It should be understood that the recording server 116 depicted in FIG. 2 may include additional components and that some of the components described may be removed and/or modified without departing from a scope of the recording server 116.

As shown in FIG. 2, the recording server 116 includes a recording server controller 202 and a plurality of modules 204a-204n corresponding to different recording device 112 types. The recording server controller 202 is generally configured to perform various recording functions as described herein below. As such, the recording server controller 202 may comprise a microprocessor, a microcontroller, an application specific integrated circuit (ASIC), and the like. In one regard, the recording server controller 202 may operate to implement one or more of the modules 204a-204n to schedule recording of media content in one or more recording devices 112.

The modules 204a-204n generally contain the data and program code necessary to schedule a recording of the media content on the different recording devices 112 according to the methods and protocols required by the different recording devices 112. In other words, the recording server controller 202 may implement the appropriate module(s) 204a-204n corresponding to the recording device(s) 112 to schedule a recording of the media content on the selected recording device(s) 112. In addition, for example, the modules 204a-204n may be associated with different DVR providers, such as, TiVo^{®}, ReplayTV^{®}, MythTV^{®}, etc.

In operation, the recording server 116 may receive a recording request 117 from the program finder server 118. The recording request 117 may include client device 110 information, which the recording server 116 may use to query the device registration database 114 for the identity and type of the recording device 112 with which the client device 110 is registered. In response to the query, the recording server 116 may receive the necessary recording device 112 information 206. Based upon this information, the recording server controller 202 may call or access 208 the appropriate module 204a-204n associated with the identified recording device 112.

In addition, the recording server controller 202 may implement or activate the appropriate module 204a-204n to schedule a recording of the media content on the selected recording device(s) 112. More particularly, for instance, the recording server 116 may transmit a recording command 119 to the selected recording device(s) 112, where the recording command 119 is based upon the data and program code necessary to schedule a recording of the media content on the selected recording device(s) 112 according to the methods and protocols required by the selected recording device(s) 112.

In situations where a user has registered multiple recording devices 112 for the same media content type with the device registration database 114, the recording server 116 may also determine which recording device 112 is to be used to record the media content. The recording server controller 202 may use either or both of two approaches, device priority or user selection.

In the device priority approach, a user may specify a priori, a relative priority for the recording devices 112 that record the same media types. The user may, for instance, specify the relative priority at the time the recording devices 112 are registered. In this approach, the recording server controller 202 may always try to record on the highest priority recording device 112 first, and upon a failure on a recording device 112, for instance, due to a scheduled recording conflict, insufficient storage space, and the like, the recording server controller 202 may try the next recording device 112 in the list. In addition, this process may be repeated until a recording device 112 that may make the recording is found or the end of the list is reached, which is an indication that all of the recording devices 112 have failed.

In the user selection approach, a user who activates a recording advertisement may specify through a user interface (UI) which recording device 112 to use for that particular recording. In this approach, the selection of the recording device 112 may be limited to those recording devices 112 suitable for the type of media content to be recorded.

### Alternate Embodiments

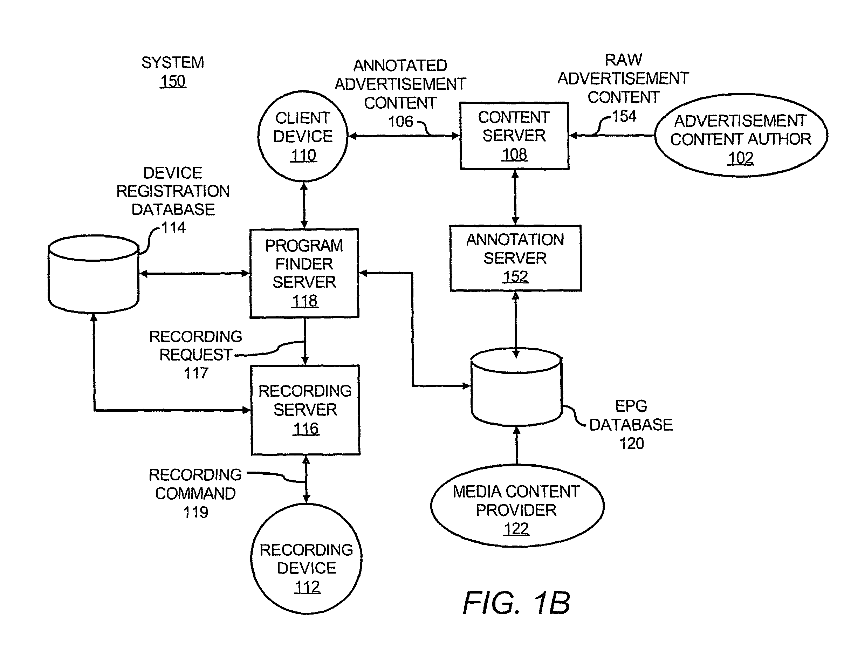

FIGS. 1B-1D depict respective block diagrams of systems 150, 160, and 170 for recording media content on different types of recording devices, according to three alternate embodiments from FIG. 1A. The systems 150, 160, and 170 include most of the same features disclosed above with respect to the system 100 depicted in FIG. 1A. It should be understood that like reference numerals are the same as those discussed above with respect to FIG. 1A. As such, only those features that differ from the system 100 in FIG. 1A will be described herein below with respect to FIG. 1B.

One of the differences between the systems 150, 160, and 170 depicted in FIGS. 1B-1D and the system 100 depicted in FIG. 1A, is that the systems 150, 160, 170 are illustrated as including an annotation server 152. More particularly, the system 150 depicted in FIG. 1B is shown as including the annotation server 152 without the advertisement creator server 104 depicted in FIG. 1A. In this regard, FIG. 1B shows a configuration, which differs from FIG. 1A, where advertisement content authors 102 may publish raw advertisement content 154 to the content server 108. The raw advertisement content 154 may comprise advertisement content that does not include a recording advertisement. In addition, the annotation server 152 may automatically discover referenced media content and may add recording advertisement metadata to the raw advertisement content 154 before the content server 108 transmits the annotated advertisement content 106 to a client device 110. A more detailed description of the annotation server 152 is provided herein below.

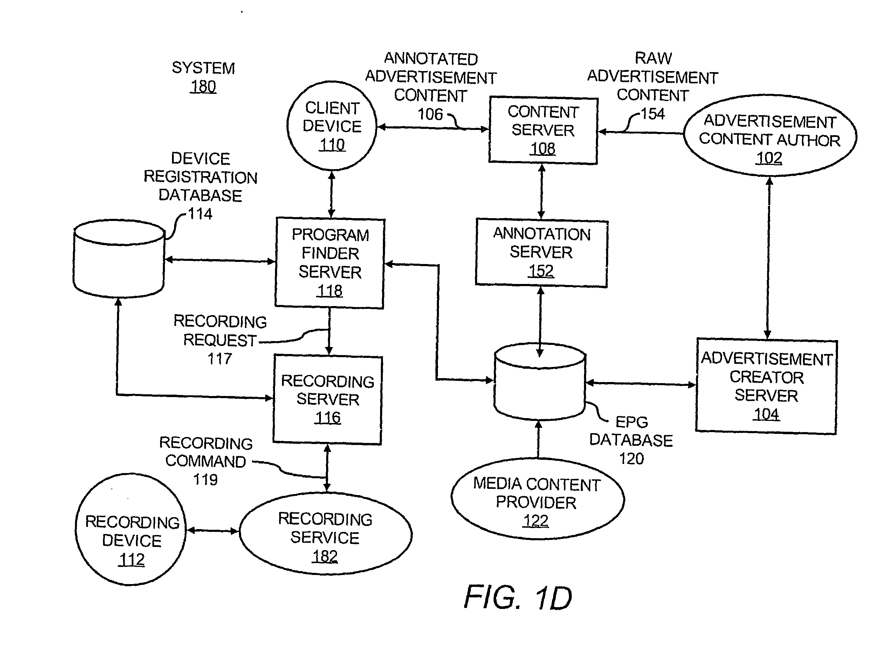

With reference now to FIGS. 1C and 1D, the systems 160 and 170 are shown with both the advertisement creator server 104 and the annotation server 152, which generally affords greater flexibility in controlling the addition of recording metadata to raw advertisement content 154. In this embodiment, the advertisement content authors 102 may choose to manually add the recording metadata to their raw advertisement content 154. In addition, the annotation server 152 may operate to add the recording metadata to advertisement content that has not been annotated with the recording metadata by the advertisement content author 102.

Moreover, the systems 100, 150, and 160 respectively depicted in FIGS. 1A-1C, show the recording server 116 calling a module 204a-204n that connects to the recording device 112 directly, in order to schedule a recording of the media content. The system 170 depicted in FIG. 1D, however, shows a configuration where the recording server 116 is not directly connected to the recording device 112. Instead, the recording server 116 is connected to the recording device 112 through a recording service 182 provided by a third party, such as, for instance, the manufacturer of the recording device 112 or the service provider for the recording device 112. The recording service 182 may comprise any third party system or service that communicates information to, or retrieves information from, one or more recording devices 112. The recording service 182 may comprise, for instance, the program guide service provided to a digital video recorder (DVR) by the service provider for that DVR.

### Annotation Server

The annotation server 152 generally comprises a server, which may be employed to insert recording advertisements into the raw advertisement content 154, to thereby create the annotated advertisement content 106. In one respect, the annotation server 152 may be provided with the raw advertisement content 154 as an input and may return the annotated advertisement content 106. More particularly, for instance, the annotation server 152 may locate referenced media content in the text of the raw advertisement content 154 by searching the text for substrings that match the titles of media content stored in the EPG database 120. The searching of subtitles may also be used, for example, to find which episode of a series is being referenced. In any case, once the annotation server 152 has discovered the referenced content, the annotation server 152 may create and insert the recording advertisement into the raw advertisement content 154, to thereby create the annotated advertisement content.

In situations such as those depicted in FIGS. 1C and 1D, where the systems 160 and 170 include both the advertisement creator server 104 and the annotation server 152, the annotation server 152 may detect whether the input advertisement content has been previously annotated with metadata by the advertisement creator server 104. If the annotation server 152 detects that the input advertisement content has previously been annotated with metadata by the advertisement creator server 104, the annotation server 152 may be prevented from inserting duplicative metadata into the advertisement content. In addition, the advertisement content authors 102 may be configured to manually specify, at the time of publication, that a piece of advertisement content should not be automatically annotated by the annotation server 152. In this regard, the annotation server 152 may substantially be prevented from applying metadata that references the same media content as already annotated and from adding metadata that references media content that the advertisement content author 102 intentionally omitted.

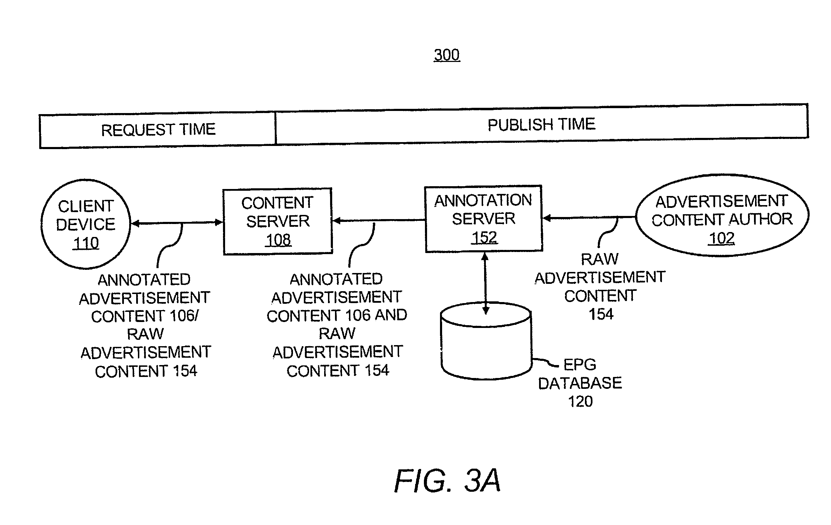

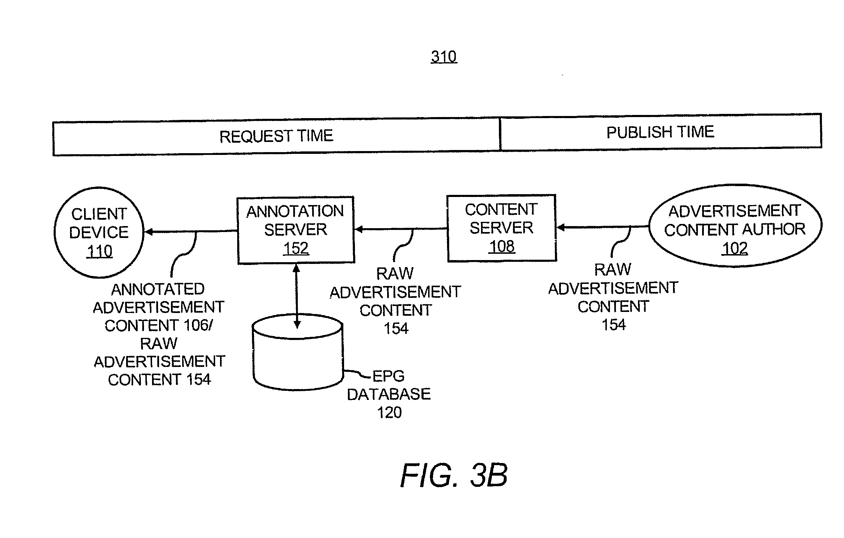

With reference now to FIGS. 3A and 3B, there are respectively shown alternative block diagrams 300 and 310 in which the annotation server 152 may be implemented to annotate the raw advertisement content 154 with a recording advertisement. As shown in FIG. 3A, during a publish time, the advertisement content author 102 may publish the raw advertisement content 154 directly to the annotation server 152. In addition, the annotation server 152 may generate the annotated advertisement content 106 through access to the EPG database 120. The annotation server 152 may further transmit both the annotated advertisement content 106 and the raw advertisement content 154 to the content server 108. During a request time, such as when the client device 110 sends a request to the content server 108 for advertisement content, the content server 108 may transmit either or both of the annotated advertisement content 106 and the raw advertisement content 154 to the client device 110.

As shown in FIG. 3B, during a publish time, the advertisement content author 102 may publish raw advertisement content 154 to the content server 108. During a request time, the client device 110 may place a request to the annotation server 152, which may retrieve the raw advertisement content 154 from the content server 108. The annotation server 152 may annotate the raw advertisement content 154 as described above and may return either or both of the annotated advertisement content 106 and the raw advertisement content 154 to the client device 110.

### Method Examples

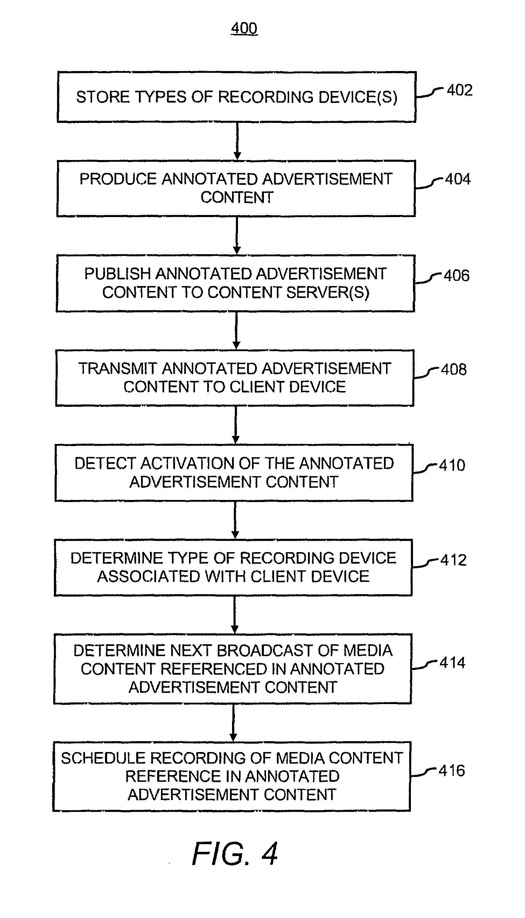

FIG. 4 illustrates a method 400 for automatically scheduling a media content recording on at least one type of recording device 112, according to an example. It is to be understood that the following description of the method 400 is but one manner of a variety of different manners in which examples of the systems 100, 150, 160, and 170 depicted in FIGS. 1A-1D may be practiced. It should also be apparent to those of ordinary skill in the art that the method 400 represents a generalized illustration and that other steps may be added or existing steps may be removed, modified or rearranged without departing from a scope of the method 400.

The method 400 is described with respect to FIGS. 1A-1D by way of example and not of limitation. It will thus be apparent to one of ordinary skill in the art, that the method 400 may be performed with systems other than those depicted in FIGS. 1A-1D.

At step 402, the types of one or more recording devices 112 may be stored in the device registration database 114. As discussed above, information pertaining to at least one of the identification of the one or more recording devices, the types of media the one or more recording devices are configured to record, the service providers of the one or more recording devices, the lineups for the one or more recording devices, the amounts of electronic programming guide data stored locally on the one or more recording devices, authentication information for the one or more recording devices, and the like may be stored in the device registration database 114. The information stored in the device registration database 114 may be used to associate sets of data and protocols for performing a recording operation on the respective one or more recording devices 112. In addition, information pertaining to the correspondence between one or more client devices 110 and the one or more recording devices 112 may also be registered in the device registration database 114.

At step 404, an annotated advertisement content 106 having recording advertisement content at least one of embedded in and associated with the advertisement content may be produced. The annotated advertisement content 106 may be produced through use of one or both of the advertisement creator server 104 and the annotation server 152 as discussed above.

The annotated advertisement content 106 may be published to one or more content servers 108 at step 406. In addition, the one or more content servers 108 may transmit the annotated advertisement content 106 to one or more client devices 110, at step 408. Moreover, activation of the annotated advertisement content 106 may be detected by one or more of the components of the system 100, 150, 160, 170 at step 410, which may initiate a recording of the media content referenced in the annotated advertisement content 106 to be scheduled.

At step 412, the type of recording device 112 associated with the client device 110 may be determined. The recording device 112 type may be determined through a query of the device registration database 114.

In addition, the next broadcast of the media content referenced in the annotated advertisement content 106 that is available to the determined type of recording device 112 may be determined at step 414. The next broadcast information may be determined through a search of the information stored in the EPG database 120.

At step 416, recording of the next broadcast of the media content referenced in the annotated advertisement content may be scheduled. In addition, scheduling of the recording may be based upon the sets of data and protocols required by the type of recording device 112 being controlled to record the media content.

### Hardware Platform

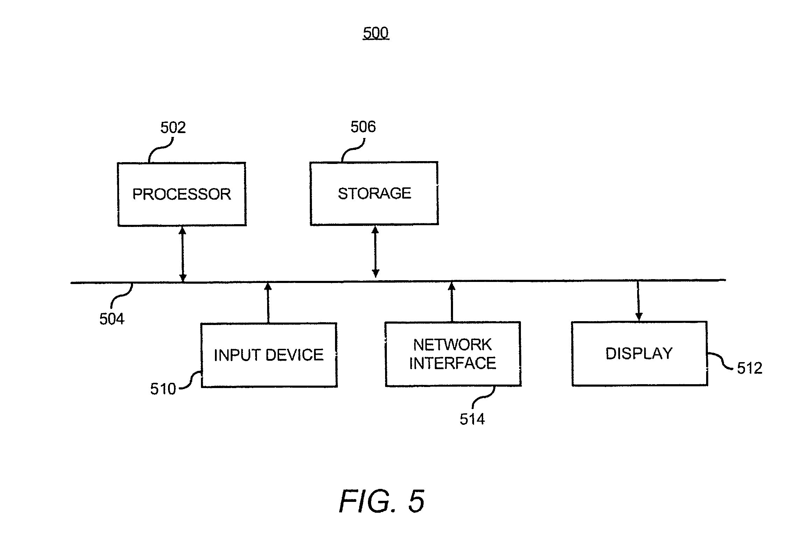

FIG. 5 illustrates a block diagram of a computer system 500 which may be used as a hardware platform to perform various functions described herein, such as, the advertisement creator server 104, the content server 108, the annotation server, 152, the program finder sever 118, the recording server 116, etc. The computer system 500 is a simplified block diagram, and the components of the system 100 may include additional elements not shown or some of the components may not include all the elements shown in FIG. 5.

The computer system 500 may include a processor 502, which provides a platform for executing software. The computer system 500 also includes a storage 506, which may include Random Access Memory (RAM) where software is resident during runtime. The storage 506 may also include one or more other types of memory such as ROM (read only memory), EPROM (erasable, programmable ROM), EEPROM (electrically erasable, programmable ROM) and data storage, such as hard disks, etc., may be used. For example, the storage 506 may include one or more hard disk drives and a removable storage drive, such as a floppy or flash memory.

A user may interface with the computer system 500 through an input device 510, such as, a keyboard, buttons, a mouse, a stylus, and the like. A display 512 and a network interface 514 may also be included. In addition, the processor 502 may communicate with one or more of the components depicted in FIG. 5 over a network, for instance, the Internet, LAN, etc., through a network adaptor 504.

### [!Invalid Character Setting]

One or more of the steps of the method 400 and other steps described herein and software described herein may be implemented as software embedded or stored on a computer readable medium, such as the storage 506, and executed by the processor 502. The steps may be embodied by a computer program, which may exist in a variety of forms both active and inactive. For example, there may exist as software program(s) comprised of program instructions in source code, object code, executable code or other formats for performing some of the steps when executed. Any of the above may be stored on a computer readable medium, which include storage devices and signals, in compressed or uncompressed form. Examples of suitable computer readable storage devices include conventional computer system RAM (random access memory), ROM (read only memory), EPROM (erasable, programmable ROM), EEPROM (electrically erasable, programmable ROM), and magnetic or optical disks or tapes. Examples of computer readable signals, whether modulated using a carrier or not, are signals that a computer system hosting or running the computer program may be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general. It is therefore to be understood that those functions enumerated herein may be performed by any electronic device capable of executing the above-described functions.

While the embodiments have been described with reference to examples, those skilled in the art will be able to make various modifications to the described embodiments without departing from the true spirit and scope. The terms and descriptions used herein are set forth by way of illustration only and are not meant as limitations. In particular, although the methods have been described by examples, steps of the methods may be performed in different orders than illustrated or simultaneously. Those skilled in the art will recognize that these and other variations are possible within the spirit and scope as defined in the following claims and their equivalents.

## Claims

1. A system for recording media content on different recording devices, said system comprising:
a metadata insertion device configured to annotate advertisement content with metadata, wherein the advertisement content references a media content, and wherein said metadata is configured to enable recording of the media content on the different recording devices;
a program finder server configured to determine the next broadcast of the media content available to the different recording devices; and
a recording server configured to access information pertaining to the different recording devices and configured to schedule a recording of the media content on one or more of the recording devices based upon data and protocols required by the one or more recording devices.

2. The system according to claim 1, wherein the metadata insertion device comprises an advertisement creator server employable by an advertisement source to annotate the advertisement content with the metadata.

3. The system according to claim 1, further comprising:
an electronic programming guide (EPG) database containing information regarding the media content; and
wherein the metadata insertion device comprises an annotation server configured to receive the advertisement content, to determine text of the advertisement content, to match the text of the advertisement content with information contained in the EPG database regarding the media content, and to create and insert the metadata into the advertisement content.

4. The system according to claim 3, wherein the annotation server is further configured to search the text of the advertisement content for substrings that match titles of media content in the EPG database.

5. The system according to claim 1, wherein the metadata insertion device comprises at least one of an advertisement creator server and an annotation server.

6. The system according to claim 1, further comprising:
a device registration database containing information regarding the different recording devices, wherein the recording server is configured to access said device registration database to retrieve the information regarding the different recording devices.

7. The system according to claim 6, wherein the device registration database is further configured to store data associating one or more client devices to respective ones of the different recording devices.

8. The system according to claim 7, wherein the one or more client devices are configured to display the annotated advertisement content, and wherein the annotated advertisement content is selectable on the one or more client devices, and wherein selection of the annotated advertisement content causes the program finder sever to determine the next broadcast and the recording server to schedule a recording of the media content.

9. The system according to claim 1, wherein the recording server comprises a plurality of modules that contain data and program code to schedule a recording on the recording devices according to the methods and protocols required by the different recording devices.

10. The system according to claim 1, further comprising:
a recording service configured to receive a command to record the media content from the recording server, and wherein the recording service is configured to issue a command to the recording device to schedule the recording of the media content.

11. The system according to claim 1, wherein the different recording devices comprises at least one of different types of recording devices and recording devices configured to receive media content from different media content providers.

12. A method for automatically scheduling a media content recording on at least one recording device, said method comprising:
detecting activation on a client device of an annotated advertisement content referencing a media content and annotated with metadata configured to enable recording of the media content on different recording devices;
determining the recording device associated with the client device and determining a next broadcast of the media content referenced in the annotated advertisement content that is available to the determined recording device; and
scheduling a recording of the next broadcast of the media content referenced in the annotated advertisement content according to sets of data and protocols required by the determined recording device.

13. The method according to claim 12, further comprising:
producing the annotated advertisement content to include the metadata, wherein the metadata is at least one of embedded in and associated with the annotated advertisement content; and
publishing the annotated advertisement content to a client device.

14. The method according to claim 13, wherein producing the annotated advertisement content further comprises producing the annotated advertisement content through use of an annotation server configured to automatically discover the referenced media content and to add the metadata to the advertisement content.

15. The method according to claim 14, wherein producing the annotated advertisement content further comprises receiving the advertisement content in the annotation server from an advertisement content author and transmitting the annotated advertisement content to a content server.

16. The method according to claim 14, wherein producing the annotated advertisement content further comprises receiving the advertisement content from a content server and transmitting the annotated advertisement content to the client device.

17. The method according to claim 12, further comprising:
storing information pertaining to a plurality of different recording devices, each of said different recording devices being associated with sets of data and protocols for performing a recording operation on the plurality of different recording devices.

18. The method according to claim 17, wherein storing information pertaining to the plurality of different recording devices further comprises storing at least one of the identification of the one or more recording devices, the types of media the one or more recording devices are configured to record, the service providers of the one or more recording devices, the lineups for the one or more recording devices, the amounts of electronic programming guide data stored locally on the one or more recording devices, and authentication information for the one or more recording devices.

19. A computer readable medium storing one or more computer programs including instructions that when executed perform the following:
detect activation on a client device of an annotated advertisement content referencing a media content and annotated with metadata configured to enable recording of the media content on different recording devices;
determine the recording device associated with the client device and determining a next broadcast of the media content referenced in the annotated advertisement content that is available to the determined recording device; and
schedule a recording of the next broadcast of the media content referenced in the annotated advertisement content according to sets of data and protocols required by the determined recording device.
